# FASCICULE DE BREVET EUROPEEN

(11) **EP 4 244 057 B1**
(45) Date de publication et mention de la délivrance du brevet: **10.04.2024**
(21) Numéro de dépôt: 21815575.2
(22) Date de dépôt: 09.11.2021
(51) Int. Cl.: B32B 17/10

(54) **VITRAGE FEUILLETE POUR VEHICULE, NOTAMMENT AUTOMOBILE**
VERBUNDSCHEIBE FÜR EIN FAHRZEUG, INSBESONDERE EIN KRAFTFAHRZEUG
LAMINATED GLAZING FOR A VEHICLE, PARTICULARLY A MOTOR VEHICLE

(30) Priorité: 12.11.2020 FR 2011595
(43) Date de publication de la demande: 20.09.2023
(73) Titulaire: Saint-Gobain Glass France, 92400 Courbevoie (FR)
(72) Inventeur: BACHAROUCHE, Jalal, 60280 CLAIROIX (FR)
(74) Mandataire: Saint-Gobain Recherche
(86) Numéro de dépôt international: PCT/FR2021/051974
(87) Numéro de publication internationale: WO 2022/101573

(56) Documents cités:
- WO-A1-2017/115041
- WO-A1-2017/115042
- WO-A1-2017/203132
- WO-A1-2018/078278

## Description

L'invention se rapporte au domaine des vitrages feuilletés pour véhicules, notamment automobiles. Elle concerne en particulier des pare-brise, mais aussi des lunettes arrières feuilletées, des toits feuilletés et des latérales feuilletées.

Les vitrages feuilletés comprennent une feuille de verre extérieure liée adhésivement à une feuille de verre intérieure au moyen d'un intercalaire de feuilletage. Les vitrages automobiles, tels que les pare-brise, sont généralement bombés, de sorte que la feuille extérieure est située du côté convexe du vitrage, et la feuille intérieure est située du côté concave du vitrage. On numérote traditionnellement les faces des feuilles de verre des vitrages feuilletés de la manière suivante : la face 1 est la face destinée à être située à l'extérieur du véhicule, la face 2 est la face interne de la feuille de verre extérieure, donc en contact avec l'intercalaire de feuilletage, la face 3 est la face externe de la feuille de verre intérieure, également en contact avec l'intercalaire de feuilletage, et enfin la face 4 est la feuille destinée à être située à l'intérieur du véhicule.

La face 2 porte généralement une couche d'émail à sa périphérie. De couleur noire, cet émail forme une bande périphérique opaque destinée à dissimuler les joints servant au montage du vitrage dans la baie de carrosserie et à les protéger contre le rayonnement ultraviolet.

Il peut être utile pour les constructeurs automobiles de disposer un marquage sur le vitrage afin notamment de faciliter le dépôt du cordon de joint par un robot, ou encore de faciliter le montage du vitrage dans la baie de carrosserie.

WO 2017/115042 A1 divulgue un vitrage feuilleté pour véhicule automobile avec en son sein un AMOLED, comprenant une feuille de verre extérieure liée adhésivement à une feuille de verre intérieure au moyen d'un intercalaire de feuilletage, dans lequel la feuille de verre extérieure porte une couche d'un premier émail, de couleur noire, notamment en périphérie de sa face en contact avec l'intercalaire de feuilletage, dite F2, et la feuille de verre intérieure porte sur sa face en contact avec l'intercalaire de feuilletage, dite F3, une couche d'un deuxième émail formant marquage située en regard de la couche du premier émail. Le repère en émail sur F3 ou F4 peut être blanc ou noir, et est utilisé afin de repérer une zone de commande tactile.

A cet effet, l'invention a pour objet un vitrage feuilleté pour véhicule, notamment automobile, comprenant une feuille de verre extérieure liée adhésivement à une feuille de verre intérieure au moyen d'un intercalaire de feuilletage, dans lequel la feuille de verre extérieure porte une couche d'un premier émail, de couleur noire, en périphérie de sa face en contact avec l'intercalaire de feuilletage, dite face 2, et la feuille de verre intérieure porte sur sa face en contact avec l'intercalaire de feuilletage, dite face 3, une couche d'un deuxième émail formant marquage et ayant une autre couleur que le noir, située en regard de la couche du premier émail, ledit vitrage feuilleté comprenant en outre un joint polymérique sur la face 4, ledit joint dissimulant ledit marquage.

Le vitrage feuilleté est notamment un pare-brise, un toit, une lunette arrière, ou une vitre latérale, d'un véhicule automobile.

L'invention a aussi pour objet un procédé de fabrication d'un tel vitrage feuilleté. Ce procédé comprend :
- le dépôt d'une couche d'un premier émail, de couleur noire, à la périphérie d'une face d'une feuille de verre dite feuille de verre extérieure,
- le dépôt d'une couche d'un deuxième émail formant marquage et ayant une autre couleur que le noir sur une face d'une feuille de verre dite feuille de verre intérieure, puis,

- la pré-cuisson des couches du premier et du deuxième émail, puis,
- le bombage des deux feuilles de verre ensemble, ladite feuille de verre intérieure étant disposée au-dessus de ladite feuille de verre extérieure, la couche du premier émail et la couche du deuxième émail étant tournées l'une vers l'autre, puis,
- le feuilletage des deux feuilles de verre au moyen d'un intercalaire de feuilletage.

Le marquage, ainsi disposé en face 3, est visible par transparence au travers de la feuille de verre intérieure lors du dépôt du cordon de joint. Ayant une autre couleur que le noir, il est visible par contraste sur le fond noir formé par le premier émail et peut donc être facilement repéré par des robots industriels.

Il s'est en outre avéré que le choix d'un émail pour réaliser le marquage permettait d'obtenir de bonnes propriétés mécaniques ainsi qu'une bonne esthétique.

Les feuilles de verre peuvent être planes ou bombées. Elles sont généralement planes au moment du dépôt des couches d'émail puis sont ensuite bombées.

Le verre des feuilles de verre est typiquement un verre silico-sodo-calcique, mais d'autres verres, par exemple des borosilicates ou des aluminosilicates peuvent également être employés. Les feuilles de verre sont de préférence obtenue par flottage, c'est-à-dire par un procédé consistant à déverser du verre fondu sur un bain d'étain en fusion.

De préférence, au moins une des feuilles de verre est en verre teinté, notamment en vert, voire en bleu ou encore en gris. Pour ce faire, la teneur pondérale totale en oxyde de fer d'au moins une des feuilles de verre est de préférence comprise entre 0,5 et 1,5%.

Dans le cas d'un pare-brise ou d'une vitre latérale avant, le facteur de transmission lumineuse du vitrage est de préférence d'au moins 70%, en prenant en compte l'illuminant A et l'observateur de référence CIE-1931. La teneur pondérale totale en oxyde de fer d'au moins une des feuilles de verre est de préférence comprise entre 0,5 et 0,9%.

Dans le cas de lunettes arrières ou de toits, ou de vitres latérales arrières, le facteur de transmission lumineuse peut être plus faible, notamment compris entre 5 et 50%, voire entre 10 et 40%. La teneur pondérale totale en oxyde de fer d'au moins une des feuilles de verre est de préférence comprise entre 0,5 et 1,5%. Au moins une des feuilles de verre peut en outre comprendre d'autres espèces colorantes, en particulier des oxydes de cobalt et/ou de chrome, ou encore du sélénium.

La feuille de verre extérieure et/ou la feuille de verre intérieure présente une épaisseur de préférence comprise entre 0,7 et 5 mm, notamment entre 1 et 4 mm, voire entre 1,5 et 3 mm.

La couche du premier émail forme de préférence une bande périphérique, c'est-à-dire une bande refermée sur elle-même qui, de chaque point de la périphérie de la feuille de verre extérieure, s'étend vers l'intérieur de la feuille de verre sur une certaine largeur, typiquement comprise entre 1 et 20 cm. La face 2 est de préférence revêtue par la couche du premier émail sur 2 à 25%, notamment 3 à 20%, voire 5 à 15% de sa surface.

Le premier émail est noir. Il présente avantageusement une coordonnée colorimétrique L* en réflexion côté verre inférieure à 10, notamment à 5, et même à 3.

La couche du deuxième émail forme un marquage. Par marquage on entend un décor servant notamment de repère pour un robot. Ce marquage occupe généralement une faible surface de la feuille de verre intérieure. La couche du deuxième émail revêt de préférence entre 0,05% et 5%, notamment entre 0,1 et 3%, de la face 3 de la feuille de verre intérieure.

Ce marquage est situé en regard de la couche du premier émail. Il n'est donc pas visible depuis l'extérieur du véhicule, mais est bien visible au travers de la feuille de verre intérieure, sur le fond noir formé par la couche du premier émail, lors du dépôt du joint.

De préférence, le marquage comprend au moins une ligne ou une pluralité de motifs (par exemple des points), situés en périphérie de la feuille de verre intérieure. Le marquage forme de préférence un ensemble de lignes, chacune des lignes ayant une épaisseur comprise entre 0,2 et 2,0 mm, notamment entre 0,3 et 1,0 mm, typiquement autour de 0,5 mm.

Le marquage est de préférence destiné à former un repère pour le dépôt du joint polymérique sur la face 4 (la face de la feuille de verre intérieure opposée à la face 3).

Le vitrage comprend en outre un joint polymérique sur la face 4, ledit joint dissimulant ledit marquage. Etant disposé sur la face 4, le joint dissimule donc le marquage depuis l'intérieur du véhicule. Le marquage n'est donc pas visible dans le vitrage final, ni de l'intérieur du véhicule, ni de l'extérieur. Ce joint se présente typiquement sous la forme d'un cordon déposé sur au moins une partie de la périphérie du vitrage. Le joint est typiquement à base de polyuréthane.

Le procédé comprend donc de préférence une étape de dépôt, à l'aide d'un robot industriel, d'un joint sur la face de la feuille de verre intérieure opposée à la face portant la couche du deuxième émail. Cette étape sera généralement mise en oeuvre chez le constructeur automobile.

Le deuxième émail peut avoir tout type de couleur autre que le noir, par exemple rouge, bleu, jaune, vert etc... De préférence le deuxième émail est de couleur blanche, afin d'assurer le meilleur contraste par rapport au fond noir du premier émail. L'émail présente de préférence, en réflexion côté verre les coordonnées colorimétriques suivantes (illuminant D65, observateur de référence CIE-1931) : L* de 40 à 85, notamment de 50 à 80, a* et b* chacun de -20 à +20, notamment de -10 à +10, voire de -5 à +5.

Les couches d'émail sont de préférence formées à partir d'une composition comprenant au moins un pigment et au moins une fritte de verre. Après cuisson, la fritte de verre forme un liant vitreux ou vitro-cristallin (partiellement vitreux et partiellement cristallisé) fixant les pigments sur la surface de la feuille de verre.

Les couches d'émail ne comprennent de préférence pas d'oxyde de plomb.

Les compositions d'émail comprennent généralement en outre un médium organique, destiné à faciliter l'application de la composition sur la feuille de verre ainsi que son adhésion temporaire à cette dernière, et qui est éliminé lors de la cuisson de l'émail. Le médium comprend typiquement des solvants, des diluants, des huiles et/ou des résines.

Dans le présent texte on qualifie de « composition d'émail » la composition liquide qui est utilisée pour déposer, sur la feuille de verre, une couche d'émail humide. Le terme « couche d'émail » est utilisé pour qualifier la couche finale, après cuisson, tandis que le terme « couche d'émail humide » est utilisé pour décrire la couche d'émail avant cuisson.

De préférence, le premier et le deuxième émail comprennent un liant vitreux ou vitro-cristallin à base de borosilicate de bismuth. Ainsi, la composition d'émail comprend de préférence, pour le premier comme pour le deuxième émail, une fritte de verre à base d'un tel verre.

Plus particulièrement, le liant vitreux de la couche d'émail (ou la fritte de verre de la composition d'émail) présente avantageusement une composition chimique comprenant les oxydes suivants, dans des teneurs pondérales variant dans les limites ci-après mentionnées :

| | |
|---|---|
| B₂O₃ | 2-30% |
| SiO₂ | 5-30% |
| Bi₂O₃ | 20-60% |
| ZnO | 0-20%. |

L'utilisation d'une telle fritte permet d'éviter, lors du bombage, tout collage des feuilles de verre entre elles, ainsi que toute diffusion d'espèces entre les deux couches d'émail.

De préférence, le premier et le deuxième émail comprennent le même liant vitreux ou vitro-cristallin (et par conséquent la même fritte de verre s'agissant de la composition d'émail). Dans ce cas, seuls les pigments diffèrent entre les deux couches d'émail. Une telle solution permet d'optimiser les propriétés de résistance mécanique du vitrage.

Les pigments sont choisis en fonction de la couleur visée.

Pour la couche du premier émail, les pigments comprennent de préférence un ou plusieurs oxydes choisis parmi les oxydes de chrome, de cuivre, de fer, de manganèse, de cobalt, de nickel. Il peut s'agir à titre d'exemple de chromates de cuivre et/ou de fer. Ces pigments confèrent une teinte noire. Pour la couleur blanche, des pigments d'oxyde de titane, en particulier de rutile, sont préférés.

La couche du premier émail et la couche du deuxième émail sont de préférence déposées par sérigraphie d'une composition d'émail. Pour ce faire, on dispose sur la feuille de verre un écran de sérigraphie, lequel comprend des mailles dont certaines sont obturées, puis on dépose la composition d'émail sur l'écran, puis on applique un racle afin de forcer la composition d'émail à traverser l'écran dans les zones où les mailles de l'écran ne sont pas obturées, de manière à former une couche d'émail humide. Selon un autre mode de réalisation, la couche du deuxième émail, voire également la couche du premier émail, est déposée par une technique d'impression numérique, par exemple par jet d'encre.

Les couches d'émail subissent ensuite une pré-cuisson, de préférence à une température allant de 500 à 650°C, notamment de 550 à 600°C. La pré-cuisson permet d'abord d'éliminer le solvant et le medium de la composition d'émail puis de faire cristalliser en partie l'émail, ce qui permet d'éviter le collage des deux feuilles de verre lors du bombage.

Les couches d'émail subissent ensuite une étape de cuisson, de préférence à une température d'au moins 550 et même 600°C, et d'au plus 700°C. La cuisson des couches d'émail est normalement réalisée lors du bombage des feuilles de verre.

L'épaisseur des couches d'émail, après l'étape de cuisson, est de préférence comprise dans un domaine allant de 5 à 30 µm, notamment de 8 à 20 µm.

De préférence, un revêtement bas-émissif ou de contrôle solaire est disposé sur la face 3, sous la couche du deuxième émail.

Ce revêtement est notamment un empilement de couches minces.

L'émissivité normale de ce revêtement, mesurée à température ambiante, est de préférence inférieure à 0,50, notamment à 0,30 et même à 0,20 ou encore à 0,10.

L'empilement de couches minces est de préférence au contact de la feuille de verre intérieure. Lors de son dépôt, la couche du deuxième émail est de préférence au contact de l'empilement de couches minces.

Par « contact », on entend dans le présent texte un contact physique. Par l'expression « à base de » on entend de préférence le fait que la couche en question comprend au moins 50% en poids du matériau considéré, notamment 60%, voire 70% et même 80% ou 90%. La couche peut même essentiellement consister ou consister en ce matériau. Par « essentiellement consister », il faut comprendre que la couche peut comprendre des impuretés sans influence sur ses propriétés. Les termes « oxyde » ou « nitrure » ne signifient pas nécessairement que les oxydes ou nitrures sont stœchiométriques. Ils peuvent en effet être sousstœchiométriques, sur-stœchiométriques ou stœchiométriques.

L'empilement comprend de préférence au moins une couche à base d'un nitrure. Le nitrure est notamment un nitrure d'au moins un élément choisi parmi l'aluminium, le silicium, le zirconium, le titane. Elle peut comprendre un nitrure d'au moins deux ou trois de ces éléments, par exemple un nitrure de silicium et de zirconium, ou un nitrure de silicium et d'aluminium. De façon préférée, la couche à base d'un nitrure est une couche à base de nitrure de silicium, plus particulièrement une couche consistant essentiellement en un nitrure de silicium. Lorsque la couche de nitrure de silicium est déposée par pulvérisation cathodique elle contient généralement de l'aluminium, car il est d'usage de doper les cibles de silicium par de l'aluminium afin d'accélérer les vitesses de dépôt.

La couche à base d'un nitrure présente de préférence une épaisseur physique comprise dans un domaine allant de 2 à 100 nm, notamment de 5 à 80 nm.

Les couches à base de nitrure sont couramment employées dans nombre d'empilements de couches minces car elles possèdent des propriétés de blocage avantageuses, en ce sens qu'elles évitent l'oxydation d'autres couches présentes dans l'empilement, notamment des couches fonctionnelles qui seront décrites ci-après.

L'empilement comprend de préférence au moins une couche fonctionnelle, notamment une couche fonctionnelle électro-conductrice. La couche fonctionnelle est de préférence comprise entre deux couches minces diélectriques, dont une au moins est une couche à base de nitrure. D'autres couches diélectriques possibles sont par exemple des couches d'oxydes ou d'oxynitrures.

Au moins une couche fonctionnelle électro-conductrice est avantageusement choisie parmi :
- les couches métalliques, notamment en argent ou en niobium, voire en or, et
- les couches d'un oxyde transparent conducteur, notamment choisi parmi l'oxyde d'indium et d'étain, les oxydes d'étain dopés (par exemple au fluor ou à l'antimoine), les oxydes de zinc dopés (par exemple à l'aluminium ou au gallium).

Ces couches sont particulièrement appréciées pour leur faible émissivité, qui confère aux vitrages d'excellentes propriétés d'isolation thermique. Dans les vitrages équipant les véhicules automobiles, les vitrages bas-émissifs permettent par temps chaud de réfléchir vers l'extérieur une partie du rayonnement solaire, et donc de limiter l'échauffement de l'habitacle desdits véhicules, et le cas échéant de réduire les dépenses de climatisation. A l'inverse, par temps froid, ces vitrages permettent de conserver la chaleur au sein de l'habitacle, et par conséquent de réduire l'effort énergétique de chauffage. Il en est de même dans le cas des vitrages équipant les bâtiments.

Selon un mode de réalisation préféré, l'empilement de couches minces comprend au moins une couche d'argent, notamment une, deux ou trois, voire quatre couches d'argent. L'épaisseur physique de la couche d'argent ou le cas échéant la somme des épaisseurs des couches d'argent est de préférence comprise entre 2 et 50 nm, notamment entre 3 et 40 nm.

Afin de protéger la ou chaque couche mince électroconductrice durant l'étape de bombage, chacune de ces couches est de préférence encadrée par au moins deux couches diélectriques. Les couches diélectriques sont de préférence à base d'oxyde, de nitrure et/ou d'oxynitrure d'au moins un élément choisi parmi le silicium, l'aluminium, le titane, le zinc, le zirconium, l'étain.

Au moins une partie de l'empilement de couches minces peut être déposée par diverses techniques connues, par exemple par dépôt chimique en phase vapeur (CVD), ou par pulvérisation cathodique, notamment assistée par champ magnétique (procédé magnétron).

L'empilement de couches minces est de préférence déposée par pulvérisation cathodique, notamment assistée par champ magnétique. Dans ce procédé, un plasma est créé sous un vide poussé au voisinage d'une cible comprenant les éléments chimiques à déposer. Les espèces actives du plasma, en bombardant la cible, arrachent lesdits éléments, qui se déposent sur la feuille de verre en formant la couche mince désirée. Ce procédé est dit « réactif » lorsque la couche est constituée d'un matériau résultant d'une réaction chimique entre les éléments arrachés de la cible et le gaz contenu dans le plasma. L'avantage majeur de ce procédé réside dans la possibilité de déposer sur une même ligne un empilement très complexe de couches en faisant successivement défiler la feuille de verre sous différentes cibles, ce généralement dans un seul et même dispositif.

Les empilements précités possèdent des propriétés de conduction de l'électricité et de réflexion de l'infrarouge utiles pour procurer une fonction de chauffage (dégivrage, désembuage) et/ou une fonction d'isolation thermique.

Lorsque l'empilement de couches minces est destiné à procurer une fonction de chauffage, des amenées de courant doivent être prévues. Il peut notamment s'agir de bandes en pâte d'argent déposées par sérigraphie sur l'empilement de couches minces, au niveau de deux bords opposés de la feuille de verre.

Après dépôt des couches d'émail, les feuilles de verre sont bombées.

Le bombage peut notamment être réalisé par gravité (le verre se déformant sous son propre poids) ou par pressage, à des températures allant typiquement de 550 à 680°C. Le bombage permet donc d'achever la cuisson des couches d'émail.

De préférence, les deux feuilles de verre (intérieure et extérieure) sont bombées ensemble. Les feuilles de verre sont de préférence maintenues à distance en disposant entre elles une poudre intercalaire assurant un espace de quelques dizaines de micromètres, typiquement de 20 à 50 µm. La poudre intercalaire est par exemple à base de carbonate de calcium et/ou de magnésium.

Lors du bombage, la feuille de verre intérieure est normalement placée au-dessus de la feuille de verre extérieure.

L'étape de feuilletage peut être réalisée par un traitement en autoclave, par exemple à des températures de 110 à 160°C et sous une pression allant de 10 à 15 bars. Préalablement au traitement en autoclave, l'air emprisonné entre les feuilles de verre et l'intercalaire de feuilletage peut être éliminé par calandrage ou par dépression.

L'intercalaire de feuilletage comprend de préférence au moins une feuille de polyvinylacétal, notamment de polyvinylbutyral (PVB).

L'intercalaire de feuilletage peut être teinté ou nonteinté afin si nécessaire de réguler les propriétés optiques ou thermiques du vitrage.

L'intercalaire de feuilletage peut avantageusement posséder des propriétés d'absorption acoustique afin d'absorber les sons d'origine aérienne ou solidienne. Il peut notamment être constitué à cet effet de trois feuilles polymériques, dont deux feuilles de PVB dites externes encadrant une feuille polymérique interne, éventuellement en PVB, de dureté plus faible que celle des feuilles externes.

L'intercalaire de feuilletage peut également posséder des propriétés d'isolation thermique, en particulier de réflexion du rayonnement infrarouge. Il peut à cet effet comprendre un revêtement de couches mince à faible émissivité, par exemple un revêtement comprenant une couche mince d'argent ou un revêtement alternant des couches diélectriques d'indices de réfractions différents, déposé sur une feuille de PET interne encadrée par deux feuilles de PVB externes.

L'épaisseur de l'intercalaire de feuilletage est généralement comprise dans un domaine allant de 0,3 à 1,5 mm, notamment de 0,5 à 1 mm. L'intercalaire de feuilletage peut présenter une épaisseur plus faible sur un bord du vitrage qu'au centre du vitrage afin d'éviter la formation d'une double image en cas d'utilisation d'un système de vision tête haute, dit HUD (head-up display).

### Exemples

Les exemples qui suivent, ainsi que les Figures 1 à 5 ci-après, illustrent l'invention de manière non-limitative.
[Fig. 1] et [Fig. 5] représentent une coupe d'une partie d'un vitrage selon l'invention.
[Fig. 2] représente le marquage déposé sur la face 3.
[Fig. 3] représente en superposition le marquage déposé sur la face 3 et le contour de la couche d'émail déposé sur la face 2.
[Fig. 4] présente des résultats de résistance en flexion 3 points.

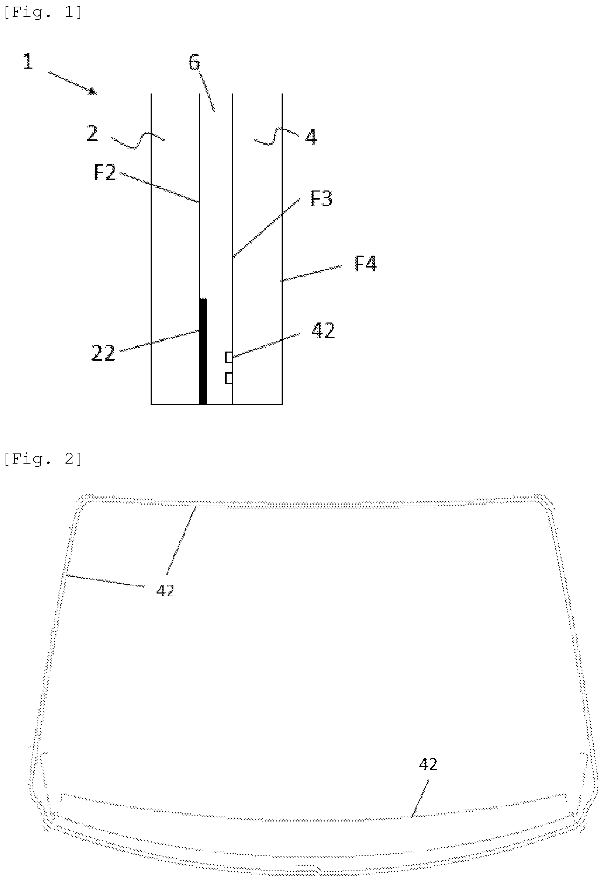

La Figure 1 représente en coupe une partie d'un vitrage 1 selon l'invention, plus particulièrement un pare-brise, à proximité d'un bord, de sorte que la courbure du vitrage n'est pas représentée. Les épaisseurs des constituants du vitrage sont volontairement non-représentées à l'échelle, afin de les rendre visibles. Comme illustré par la Figure 1, la feuille de verre extérieure 2 est liée adhésivement à la feuille de verre intérieure 4 au moyen d'un intercalaire de feuilletage 6, typiquement en PVB (polyvinylbutyral). La face 2, notée F2 sur la figure, porte à la périphérie du vitrage une couche d'émail 22 formant une bande opaque noire. La face 3 du vitrage, F3, porte quant à elle un marquage 42 sous la forme d'une couche d'émail, ici d'émail blanc et formant deux lignes parallèles, typiquement de l'ordre de 0,5 mm de largeur, en regard de la couche d'émail 22. Vu depuis l'intérieur, le marquage 42 est parfaitement visible sur le fond noir formé par l'émail 22, au travers de la feuille de verre intérieure 4, avant dépôt d'un joint.

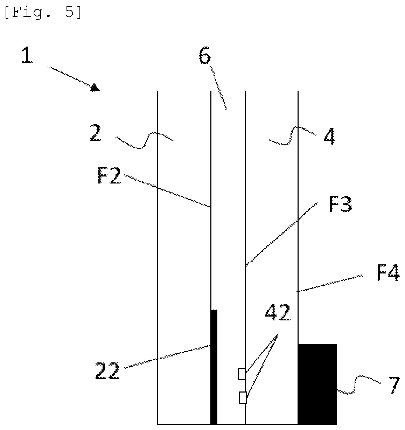

La Figure 5 représente en outre, de manière schématique, un joint polymérique 7 disposé sur la face F4, et dissimulant le marquage 42. Le marquage n'est ainsi plus visible, ni depuis l'intérieur du véhicule, du fait du joint 7, ni de l'extérieur du véhicule du fait de l'émail 22.

La Figure 2 représente un exemple particulier de marquage 42, sous la forme d'un ensemble de lignes, formant repère pour le dépôt ultérieur du joint adhésif. Deux lignes parallèles sont déposées à la périphérie de la feuille de verre intérieure 4, auxquelles s'ajoutent quelques lignes supplémentaires dans la partie basse du vitrage (ici un pare-brise) . Le marquage est formé par dépôt par sérigraphie d'une couche d'émail blanc. Chaque ligne a dans cet exemple une largeur de 0,5 mm.

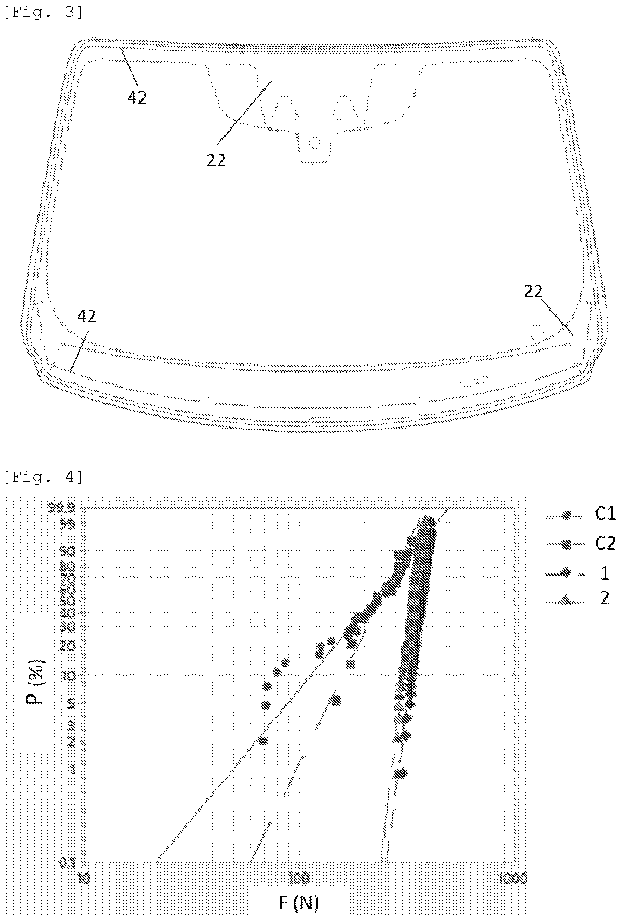

La Figure 3 représente de manière superposée le marquage 42 de la Figure 2 et une couche d'émail 22. Pour cette dernière, seul le contour externe de l'émail est représenté, l'émail étant déposé depuis le bord de la feuille de verre extérieure jusqu'au contour représenté. La Figure 3 illustre donc le fait que l'émail 22 est apte à dissimuler le marquage 42 dans le pare-brise final.

Des pare-brise ont été fabriqués avec les designs d'émail représentés en figure 3.

La feuille de verre extérieure, de 2,6 mm d'épaisseur, était en verre vert comprenant comme espèce colorante environ 0,9% en poids d'oxyde de fer. La feuille de verre intérieure, de 2,1 mm d'épaisseur, était en verre clair (0,1% en poids d'oxyde de fer) revêtu sur la face destinée à devenir la face 3 d'un empilement de couches minces de contrôle solaire comprenant comme couches fonctionnelles des couches d'argent.

La bande d'émail 22 a été déposée sur une face de la feuille de verre extérieure par sérigraphie d'une composition d'émail noir (Ferro 14331) comprenant une fritte de verre à base de borosilicate de bismuth. L'épaisseur d'émail humide était de 15 µm.

Dans les exemples comparatifs, le marquage sur la face 3 a été réalisé par sérigraphie d'une pâte d'argent (SP1998C), comprenant des particules d'argent et une fritte de verre.

Dans les exemples selon l'invention, le marquage a été réalisé par sérigraphie d'une composition d'émail blanc (PMI DV778380) comprenant une fritte de verre à base de borosilicate de bismuth et des pigments blancs. L'épaisseur humide était de 18 µm.

Après pré-cuisson (à 580°C) les feuilles de verres ont été bombées ensemble (à 600°C).

L'ensemble a ensuite été feuilleté au moyen d'un intercalaire de PVB de 0,76 mm d'épaisseur.

Dans le cas du marquage au moyen de la pâte d'argent, un transfert d'argent depuis la face 3 vers la face 2 pendant le bombage a pu être observé, créant des défauts esthétiques visibles depuis la face 1, ainsi qu'une fragilisation mécanique, comme montré par les essais mécaniques ci-après. En revanche, dans le cas des exemples selon l'invention, aucun défaut esthétique n'est observé, et en particulier aucune marque blanche n'est visible depuis la face 1.

Des essais mécaniques en flexion 3 points ont en outre été réalisés.

La Figure 4 est un graphique représentant la probabilité de rupture (notée P et exprimée en %) en fonction de la force (notée F et exprimée en Newtons) pour les deux essais comparatifs (C1, C2) où le marquage était à base de pâte d'argent, et pour deux essais selon l'invention (notés 1 et 2).

Il ressort de cette figure que le choix d'un marquage selon l'invention améliore très nettement la résistance mécanique du pare-brise.

## Revendications

1. Vitrage feuilleté (1) pour véhicule, notamment automobile, comprenant une feuille de verre extérieure (2) liée adhésivement à une feuille de verre intérieure (4) au moyen d'un intercalaire de feuilletage (6), dans lequel la feuille de verre extérieure (2) porte une couche d'un premier émail (22), de couleur noire, en périphérie de sa face en contact avec l'intercalaire de feuilletage (6), dite face 2 (F2), et la feuille de verre intérieure (4) porte sur sa face en contact avec l'intercalaire de feuilletage, dite face 3 (F3), une couche d'un deuxième émail (42) formant marquage et ayant une autre couleur que le noir, située en regard de la couche du premier émail (22), ledit vitrage feuilleté comprenant en outre un joint polymérique (7) sur la face de la feuille de verre intérieure (4), dite face 4 (F4), opposée à la face 3, ledit joint (7) dissimulant ledit marquage (42).

2. Vitrage feuilleté selon la revendication 1, dans lequel le marquage (42) comprend au moins une ligne ou une pluralité de motifs, situés en périphérie de la feuille de verre intérieure (4).

3. Vitrage feuilleté selon l'une des revendications précédentes, dans lequel le marquage (42) est destiné à former un repère pour le dépôt du joint polymérique sur face 4 (F4).

4. Vitrage feuilleté selon l'une des revendications précédentes, dans lequel le premier émail (22) présente une coordonnée colorimétrique L* en réflexion côté verre inférieure à 10.

5. Vitrage feuilleté selon l'une des revendications précédentes, dans lequel le deuxième émail (42) est de couleur blanche.

6. Vitrage feuilleté selon l'une des revendications précédentes, dans lequel la couche du deuxième émail (42) revêt entre 0,05% et 5%, notamment entre 0,1 et 3%, de la face 3 (F3) de la feuille de verre intérieure (4).

7. Vitrage feuilleté selon l'une des revendications précédentes, dans lequel le premier (22) et le deuxième émail (42) comprennent un liant vitreux ou vitro-cristallin à base de borosilicate de bismuth.

8. Vitrage feuilleté selon la revendication précédente, dans lequel le premier (22) et le deuxième émail (42) comprennent le même liant vitreux ou vitro-cristallin.

9. Vitrage feuilleté selon l'une des revendications précédentes, dans lequel un revêtement bas-émissif ou de contrôle solaire est disposé sur la face 3 (F3), sous la couche du deuxième émail (42).

10. Vitrage feuilleté selon l'une des revendications précédentes, dans lequel le joint (7) se présente sous la forme d'un cordon déposé sur au moins une partie de la périphérie du vitrage.

11. Vitrage feuilleté selon l'une des revendications précédentes, dans lequel le joint (7) est à base de polyuréthane.

12. Vitrage feuilleté selon l'une des revendications précédentes, qui est un pare-brise, un toit, une lunette arrière, ou une vitre latérale, d'un véhicule automobile.

13. Procédé de fabrication d'un vitrage feuilleté (1) selon l'une des revendications précédentes, comprenant :
- le dépôt d'une couche d'un premier émail (22), de couleur noire, à la périphérie d'une face d'une feuille de verre dite feuille de verre extérieure (2),
- le dépôt d'une couche d'un deuxième émail (42) formant marquage et ayant une autre couleur que le noir sur une face d'une feuille de verre dite feuille de verre intérieure (4), puis,
- la pré-cuisson des couches du premier (22) et du deuxième émail (42), puis,
- le bombage des deux feuilles de verre (2, 4) ensemble, ladite feuille de verre intérieure (4) étant disposée au-dessus de ladite feuille de verre extérieure (2), la couche du premier émail (22) et la couche du deuxième émail (42) étant tournées l'une vers l'autre, puis,
- le feuilletage des deux feuilles de verre au moyen d'un intercalaire de feuilletage (6).

14. Procédé selon la revendication précédente, dans lequel la couche du premier émail (22) et la couche du deuxième émail (42) sont déposées par sérigraphie d'une composition d'émail ou par une technique d'impression numérique.

15. Procédé selon l'une des revendications 13 ou 14, comprenant une étape de dépôt, à l'aide d'un robot industriel, d'un joint (7) sur la face (F4) de la feuille de verre intérieure (4) opposée à la face (F3) portant la couche du deuxième émail (42).

## Patentansprüche

1. Verbundverglasung (1) für ein Fahrzeug, insbesondere ein Kraftfahrzeug, umfassend eine äußere Glasscheibe (2), die mittels einer Verbundzwischenlage (6) mit einer inneren Glasscheibe (4) haftend verbunden ist, wobei die äußere Glasscheibe (2) an dem Umfang ihrer Seite in Kontakt mit der Verbundzwischenlage (6), Seite 2 (F2) genannt, eine Schicht eines ersten Emails (22) mit schwarzer Farbe trägt, und die innere Glasscheibe (4) auf ihrer Seite in Kontakt mit der Verbundzwischenlage, Seite 3 (F3) genannt, eine Schicht eines zweiten Emails (42) trägt, die eine Markierung ausbildet und eine andere Farbe als schwarz besitzt, die sich gegenüber der Schicht des ersten Emails (22) befindet, die Verbundverglasung ferner umfassend eine Polymerdichtung (7) auf der Seite der inneren Glasscheibe (4), Seite 4 (F4) genannt, gegenüber der Seite 3, wobei die Dichtung (7) die Markierung (42) verbirgt.

2. Verbundverglasung nach Anspruch 1, wobei die Markierung (42) mindestens eine Linie oder eine Vielzahl von Mustern, die sich an dem Umfang der inneren Glasscheibe (4) befinden, umfasst.

3. Verbundverglasung nach einem der vorstehenden Ansprüche, wobei die Markierung (42) dafür bestimmt ist, ein Kennzeichen für das Aufbringen der Polymerdichtung auf Seite 4 (F4) auszubilden.

4. Verbundverglasung nach einem der vorstehenden Ansprüche, wobei das erste Email (22) eine kolorimetrische Koordinate L* einer glasseitigen Reflexion von weniger als 10 aufweist.

5. Verbundverglasung nach einem der vorstehenden Ansprüche, wobei das zweite Email (42) eine weiße Farbe hat.

6. Verbundverglasung nach einem der vorstehenden Ansprüche, wobei die Schicht des zweiten Emails (42) zwischen 0,05 % und 5 %, insbesondere zwischen 0,1 und 3 %, der Seite 3 (F3) der inneren Glasscheibe (4) bedeckt.

7. Verbundverglasung nach einem der vorstehenden Ansprüche, wobei das erste (22) und das zweite Email (42) ein glasartiges oder glasig-kristallines Bindemittel auf der Basis von Wismutborsilikat umfassen.

8. Verbundverglasung nach dem vorstehenden Anspruch, wobei das erste (22) und das zweite Email (42) das gleiche glasartige oder glasig-kristalline Bindemittel umfassen.

9. Verbundverglasung nach einem der vorstehenden Ansprüche, wobei eine niedrig emittierende Beschichtung oder Sonnenschutzbeschichtung auf der Seite 3 (F3) unter der Schicht des zweiten Emails (42) angeordnet ist.

10. Verbundverglasung nach einem der vorstehenden Ansprüche, wobei die Dichtung (7) in Form eines Streifens vorliegt, der auf mindestens einem Teil des Umfangs der Verglasung aufgebracht ist.

11. Verbundverglasung nach einem der vorstehenden Ansprüche, wobei die Dichtung (7) auf der Basis von Polyurethan hergestellt ist.

12. Verbundverglasung nach einem der vorstehenden Ansprüche, die eine Windschutzscheibe, ein Dach, eine Heckscheibe oder eine Seitenscheibe eines Kraftfahrzeugs ist.

13. Verfahren zum Herstellen einer Verbundverglasung (1) nach einem der vorstehenden Ansprüche, umfassend:
- Aufbringen einer Schicht eines ersten Emails (22) mit schwarzer Farbe auf den Umfang einer Seite einer Glasscheibe, äußere Glasscheibe (2) genannt,
- Aufbringen einer Schicht eines zweiten Emails (42), die eine Markierung ausbildet und eine andere Farbe als schwarz besitzt, auf einer Seite einer Glasscheibe, innere Glasscheibe (4) genannt, dann
- Vorbrennen der Schichten des ersten (22) und des zweiten Emails (42), dann
- Biegen der zwei Glasscheiben (2, 4) zusammen, wobei die innere Glasscheibe (4) über der äußeren Glasscheibe (2) angeordnet ist, wobei die Schicht des ersten Emails (22) und die Schicht des zweiten Emails (42) einander zugewandt sind, dann
- Laminieren der zwei Glasscheiben mittels einer Laminierzwischenlage (6).

14. Verfahren nach dem vorstehenden Anspruch, wobei die Schicht des ersten Emails (22) und die Schicht des zweiten Emails (42) durch Siebdruck einer Emailzusammensetzung oder durch eine Digitaldrucktechnik aufgebracht werden.

15. Verfahren nach einem der Ansprüche 13 oder 14, umfassend einen Schritt des Aufbringens einer Dichtung (7) auf der Seite (F4) der inneren Glasscheibe (4), die der Seite (F3) gegenüberliegt, die die Schicht des zweiten Emails (42) trägt, mithilfe eines Industrieroboters.

## Claims

1. A laminated glazing (1) for a vehicle, in particular a motor vehicle, comprising an exterior glass sheet (2) adhesively bonded to an interior glass sheet (4) by means of a lamination interlayer (6), wherein the exterior glass sheet (2) carries a layer of a first enamel (22), of black color, on the periphery of its face in contact with the lamination interlayer (6), known as face 2, (F2), and the interior glass sheet (4) carries on its face in contact with the lamination interlayer, known as face 3 (F3), a layer of a second enamel (42) forming a marking and having a color other than black, located opposite the layer of the first enamel (22), said laminated glazing further comprising a polymeric seal (7) on the face of the interior glass sheet (4), called face 4 (F4), opposite face 3, said seal (7) concealing said marking (42).

2. The laminated glazing according to claim 1, wherein the marking (42) comprises at least one line or a plurality of patterns, located at the periphery of the interior glass sheet (4).

3. The laminated glazing according to one of the preceding claims, wherein the marking (42) is intended to form a reference point for the deposition of the polymeric seal on face 4 (F4).

4. The laminated glazing according to one of the preceding claims, wherein the first enamel (22) has a colorimetric coordinate L* in reflection on the glass side lower than 10.

5. The laminated glazing according to one of the preceding claims, wherein the second enamel (42) is white in color.

6. The laminated glazing according to one of the preceding claims, wherein the layer of second enamel (42) coats between 0.05% and 5%, in particular between 0.1 and 3%, of face 3 (F3) of the interior glass sheet (4).

7. The laminated glazing according to one of the preceding claims, wherein the first (22) and second (42) enamels comprise a bismuth borosilicate-based glass or glass-crystalline binder.

8. The laminated glazing according to the preceding claim, wherein the first (22) and second (42) enamels comprise the same glass or glass-crystalline binder.

9. The laminated glazing according to one of the preceding claims, wherein a low-emissive or solar control coating is disposed on face 3 (F3), under the layer of the second enamel (42).

10. The laminated glazing according to one of the preceding claims, wherein the seal (7) is in the form of a bead deposited on at least part of the periphery of the glazing.

11. The laminated glazing according to one of the preceding claims, wherein the seal (7) is polyurethane-based.

12. The laminated glazing according to one of the preceding claims, which is a windshield, a roof, a rear window, or a side window, of a motor vehicle.

13. A method for manufacturing the laminated glazing (1) according to one of the preceding claims, comprising:
- the deposition of a layer of a first enamel (22), of black color, on the periphery of one face of a glass sheet called exterior glass sheet (2),
- the deposition of a layer of a second enamel (42) forming a marking and having a color other than black on one face of a glass sheet called interior glass sheet (4), then,
- pre-firing of the first (22) and second (42) enamel layers, then,
- bending the two glass sheets (2, 4) together, said interior glass sheet (4) being disposed on top of said exterior glass sheet (2), the layer of the first enamel (22) and the layer of the second enamel (42) facing each other, and then,
- the laminating of the two glass sheets by means of a lamination interlayer (6).

14. The method according to the preceding claim, wherein the layer of the first enamel (22) and the layer of the second enamel (42) are deposited by screen-printing an enamel composition or by a digital printing technique.

15. The method according to one of the claims 13 or 14, comprising a step of depositing, with the help of an industrial robot, a seal (7) on the face (F4) of the interior glass sheet (4) opposite the face (F3) bearing the layer of the second enamel (42).
